# EUROPÄISCHE PATENTSCHRIFT

(11) **EP 0 998 020 B1**
(45) Veröffentlichungstag und Bekanntmachung des Hinweises auf die Patenterteilung: **08.10.2008**
(21) Anmeldenummer: 98120467.0
(22) Anmeldetag: 29.10.1998
(51) Int. Cl.: H02M 7/06, H02H 9/00

(54) **Schaltungsanordnung zum Laden eines Kondensators in einem Gleichspannungszwischenkreis eines Umrichters**
Charging capacitor unit in the intermediate rectifier circuit of a converter
Dispositif pour la charge d'un condensateur dans le circuit intermédiaire redresseur d'un convertisseur

(43) Veröffentlichungstag der Anmeldung: 03.05.2000
(73) Patentinhaber: Converteam GmbH, 12277 Berlin (DE)
(72) Erfinder: Jakob, Roland Dr.-Ing., 12524 Berlin (DE); Müller, Dieter Dipl.-Ing., 13509 Berlin (DE); Neuburg, Norbert Dipl.-Ing., 13507 Berlin (DE)
(74) Vertreter: Dreiss, Fuhlendorf, Steimle & Becker

(56) Entgegenhaltungen:
- DE-A- 3 507 318
- US-A- 5 627 738
- ANONYMOUS: "Surge Control Using Fan Winding Impedance. October 1982." IBM TECHNICAL DISCLOSURE BULLETIN, Bd. 25, Nr. 5, Oktober 1982, Seiten 2690-2691, XP002098209 New York, US

## Beschreibung

Die Erfindung betrifft eine Schaltungsanordnung in einem Umrichter, für den zur Herstellung der Betriebsbereitschaft ein Kondensator aufgeladen werden muß, insbesondere zum Laden eines Kondensators in einem Gleichspannungszwischenkreis in einem Umrichter, für dessen Kühlung mindestens ein Lüfter vorhanden ist.

Es ist allgemein bekannt, im Ladestromkreis eines Zwischenkreiskondensators zur Begrenzung des Aufladestromes einen Widerstand vorzusehen. Wegen der großen kurzzeitig auftretenden Spitzenleistung beim Aufladevorgang muss ein Widerstand großer Leistung eingesetzt werden. Mit zunehmender Leistung nimmt jedoch der Platzbedarf zu und wegen der zunehmenden Wärmeentwicklung die Zuverlässigkeit des Widerstandes ab. Da die Zuverlässigkeit des gesamten Umrichters unmittelbar von der Zuverlässigkeit des Aufladewiderstandes abhängig ist, wird erheblicher Kostenaufwand für den Aufladewiderstand betrieben, und entsprechend der Baugröße ist auch ein bestimmtes Volumen des Umrichters für den Aufladewiderstand vorzusehen.

Weiterhin ist es aus "E.A. Dobberstein, Surge Control Using Fan Winding Impedance. October 1982, IBM TECHNICAL DISCLSURE BULLETIN, Bd. 25, Nr. 5, Oktober 1982, Seiten 2690-2691, PX002098209 New York, US". bekannt, einen Lüfter als strombegrenzendes Schaltelement für den zu ladenden Zwischenkreiskondensator vorzusehen.

Mit der vorliegenden Erfindung wird nun die Aufgabe gelöst, eine Schaltungsanordnung für die Aufladung eines Zwischenkreiskondensators von einem dreiphasigen Netz anzugeben, die keinen separaten Aufladewiderstand enthält und somit die zuvor beschriebenen Nachteile vermieden werden.

Diese Aufgabe wird durch die im ersten Anspruch beschriebene Schaltungsanordnung gelöst.

Das Wesen der Erfindung besteht darin, daß im Ladestromkreis des Zwischenkreiskondensators eine Motorwicklung eines überlicherweise ohnehin in Umrichtern vorhandenen Lüftermotors als strombegrenzende Reaktanz geschaltet wird.

Die Erfindung wird nunmehr an einem Ausführungsbeispiel erläutert. In der dazugehörigen Zeichnung zeigen
- Fig. 1: eine Schaltungsanordnung gemäß Erfindung mit einem Drehstromlüftermotor,
- Fig. 2: eine Variante der erfindungsgemäßen Schaltungsanordnung für die Aufladung des Zwischenkreiskondensators und
- Fig. 3: die Variante der erfindungsgemäßen Schaltungsanordnung für den Lüfterbetrieb.

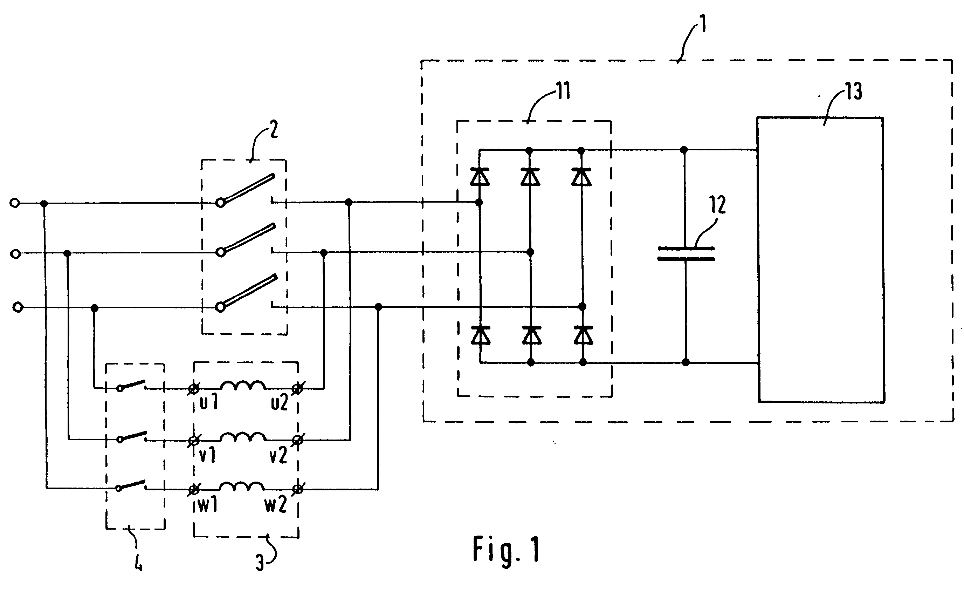

Gemäß Fig. 1 besteht die erfindungsgemäße Schaltungsanordnung im wesentlichen aus einem Umrichter 1, der über einen Hauptschütz 2 mit einem dreiphasigen Eingangsnetz R, S, T verbunden ist sowie aus einem Lüftermotor 3, der über einen Lüfterschalter 4 mit dem dreiphasigen Eingangsnetz R, S, T verbunden ist. Der Umrichter 1 besteht aus einem Gleichrichter 11, einem Zwischenkreiskondensator 12 und einem Wechselrichter 13.

Durch Schließen des Lüfterschalters 4 wird ein Ladestromkreis von dem dreiphasigen Eingangsnetz R, S, T über die Motorwicklungen u1, u2; v1, v2; w1, w2 des hier als Drehstrommotor ausgeführten Lüftermotors 3 und über den Gleichrichter 11 zu dem Zwischenkreiskondensator 12 aufgebaut. Im Einschaltmoment ist der Zwischenkreiskondensator 12 entladen und stellt einen Kurzschluß dar, so daß die Motorwicklungen u1, u2; v1, v2; w1, w2 eine Sternschaltung bilden. Mit zunehmender Aufladung des Zwischenkreiskondensators 12 wird der Sternpunkt hochohmig. Die Größe des Einschaltstromes wird durch die Induktivität der Motorwicklungen u1, u2; v1, v2; w1, w2 begrenzt. Wird nun zeitlich nach dem Lüfterschalter 4 das Hauptschütz 2 geschaltet, so lädt sich der Zwischenkreiskondensator 12 vollständig auf und die Motorwicklungen u1, u2; v1, v2; w1, w2 werden somit in Dreieck geschaltet.

Bei der erfindungsgemäßen Schaltungsanordnung entfällt nicht nur der sonst übliche Aufladewiderstand, sondern vorteilhafterweise wird die Funktion des Schalters für den Lüfter und die Funktion des sonst zusätzlich vorhandenen Schalters für die Aufladung des Zwischenkreiskondensators 12 von einem Lüfterschalter 4 erfüllt.

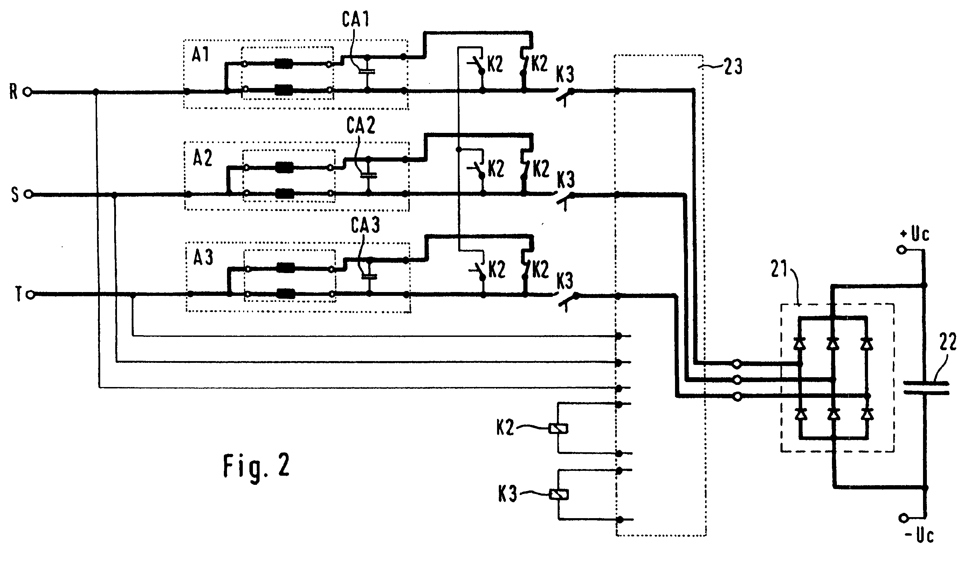

Fig. 2 zeigt eine Variante der erfindungsgemäßen Schaltungsanordnung für den Fall, daß Einphasenwechselstrommotoren als Lüftermotoren eingesetzt werden. Gemäß Fig. 2 besteht die Schaltungsanordnung aus drei Lüftermotoren A1, A2, A3, einem ersten Schütz K2, einem zweiten Schütz K3, einem Stromversorgungsverteiler 23, einer Gleichrichterbrücke 21 und einem Zwischenkreiskondensator 22. Die Aufladung des Zwischenkreiskondensators 22 erfolgt aus dem dreiphasigen Eingangsnetz R, S, T über die parallel geschalteten Motorwicklungen der drei Lüftermotoren A1, A2, A3, die als einphasige Wechselstrommotoren realisiert sind, und eine Gleichrichterbrücke 21, die speziell für den Aufladevorgang vorgesehen und entsprechend dimensioniert ist. Zur Aufladung des Zwischenkreiskondensators 22 ist das erste Schütz K2 in Ruhestellung, das zweite Schütz K3 ist angezogen. Damit ergibt sich der in Fig. 2 durch dick markierte Linien hervorgehobene Aufladestromkreis.

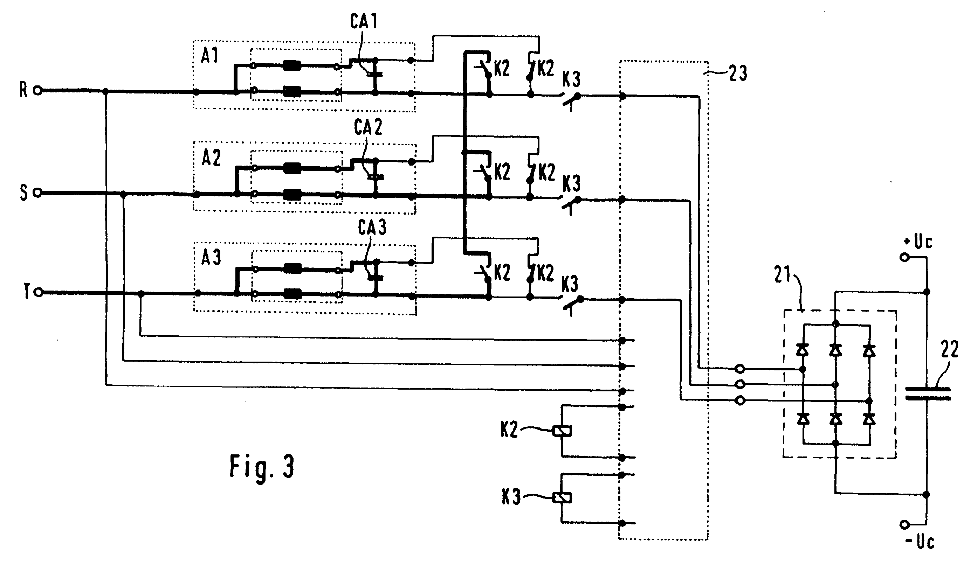

Wenn der Aufladevorgang des Zwischenkreiskondensators 23 abgeschlossen ist, fällt das zweite Schütz K3 ab und das erste Schütz K2 zieht an. In Fig. 3 ist der dann entstehende Stromkreis durch dick markierte Linien hervorgehoben. In diesem Zustand werden die Motorwicklungen der Lüftermotoren A1, A2, A3 mit dem entsprechenden Hilfskondensatoren CA1, CA2, CA3 verbunden und in Stern geschaltet. An jedem Lüftermotor A1, A2, A3 liegt somit die nicht verkettete Spannung an.

Die erfindungsgemäße Schaltungsanordnung kann den technischen Erfordernissen entsprechend abgewandelt werden. Die strombegrenzende Reaktanz kann gebildet werden durch
- mehrere Wicklungen eines Lüftermotors, die in Reihe oder parallel geschaltet werden,
- Wicklungen, die sich in einer Phase des Eingangsnetzes befinden oder die auf mehrere Phasen des Eingangsnetzes aufgeteilt sind,
- Wicklungen mehrerer Lüftermotoren.

Als Gleichrichter für den Aufladekreis kann sowohl der Hauptgleichrichter des Umrichters als auch ein zusätzlicher spezieller Hilfsgleichrichter verwendet werden.

Die Aufladezeit des Zwischenkreiskondensators kann durch zusätzliche Beschaltung der strombegrenzenden Reaktanz beispielsweise mit einem Widerstand, einem Kondensator oder einen Kaltleiter verkürzt werden.

Somit kann die Schaltungsanordnung an unterschiedliche Bedingungen angepaßt werden. Im Vergleich zu bekannten Schaltungsanordnungen mit einem Ladewiderstand ist die erfindungsgemäße Schaltungsanordnung kostengünstiger, raumsparender und zuverlässiger.

## Patentansprüche

1. Schaltungsanordnung zum Laden eines Zwischenkreiskondensators (12) in einem Gleichspannungszwischenkreis eines Umrichters (1), mit mindestens einem Lüftermotor (3) zum Antrieb eines Lüfters, wobei mindestens einem Gleichrichterzweig in dem Gleichspannungszwischenkreis mindestens eine Motorwicklung (u1, u2; v1, v2; w1, w2) des mindestens einen Lüftermotors (3) als strombegrenzendes Schaltelement für den zu ladenden Zwischenkreiskondensator (12) zugeordnet ist, **dadurch gekennzeichnet, dass** in jeder Phase (R, S, T) eines dreiphasigen Eingangsnetzes eine der Motorwicklungen (u1, u2; v1, v2; w1, w2) des mindestens einen Lüftermotors (3) liegt und jede Motorwicklung (u1, u2; v1, v2; w1, w2) über einen der Gleichrichterzweige eines dreiphasigen Gleichrichters (11) mit dem zu ladenden Zwischenkreiskondenstor (12) verbunden ist, dass im Einschaltmoment die Motorwicklungen (u1, u2; v1, v2; w1, w2) eine Sternschaltung bilden, und dass bei Abschluss des Ladevorganges des Zwischenkreiskondensators (12) die Motorwicklungen (u1, u2; v1, v2; w1, w2) eine Dreiecksschaltung bilden.

2. Schaltungsanordnung nach Anspruch 1, **dadurch gekennzeichnet, dass** in jeder Phase (R, S, T) eines dreiphasigen Eingangsnetzes eine Wicklung eines einphasigen Wechselstrommotors liegt.

## Claims

1. Circuit arrangement for charging an intermediate circuit capacitor (12) in an intermediate d.c. circuit of a d.c. voltage changer (1), having at least one fan motor (3) for operating a fan, wherein at least one rectifier branch in the intermediate d.c. circuit is assigned to at least one motor winding (u1, u2; v1, v2; w1, w2) of the at least one fan motor (3) as the current-restriction switching element for the intermediate circuit capacitor (12) to be charged, **characterized in that** one of the motor windings (u1, u2; v1, v2; w1, w2) of the at least one fan motor (3) is located in each phase (R, S, T) of a three-phase input network, and each motor winding (u1, u2; v1, v2; w1, w2) is connected with the intermediate circuit capacitor (12) to be charged via one of the rectifier branches, that at the moment of being switched on, the motor windings (u1, u2; v1, v2; w1, w2) form a star connection, and that at the termination of the charging process of the intermediate circuit capacitor (12) the motor windings (u1, u2; v1, v2; w1, w2) form a delta connection.

2. The circuit arrangement in accordance with claim 1, **characterized in that** a winding of a single-phase a.c. current motor is located in each phase (R, S, T) of a three-phase input network.

## Revendications

1. Agencement de circuits pour la charge d'un condensateur de circuit intermédiaire (12) dans un circuit intermédiaire à tension continue d'un convertisseur (1), comportant au moins un moteur de ventilateur (3) pour l'entraînement d'un ventilateur, au moins un enroulement de moteur (u1, u2; v1, v2; w1, w2) du au moins un moteur de ventilateur (3) étant associé à au moins une branche du redresseur dans le circuit intermédiaire à tension continue en tant qu'élément de commutation limiteur de courant pour le condensateur de circuit intermédiaire (12) à charger, **caractérisé en ce que** dans chaque phase (R, S, T) d'un réseau d'entrée triphasé se trouve un des enroulements de moteur (u1, u2; v1, v2; w1, w2) du au moins un moteur de ventilateur (3) et que chaque enroulement de moteur (u1, u2; v1, v2; w1, w2) est connecté au condensateur de circuit intermédiaire (12) à charger par l'intermédiaire d'une des branches de redresseur d'un redresseur triphasé (11), **en ce qu'**au moment de l'activation, les enroulements de moteur (u1, u2; v1, v2; w1, w2) forment un montage en étoile, et **en ce qu'**à la fin du processus de charge du condensateur de circuit intermédiaire (12) les enroulements de moteur (u1, u2; v1, v2; w1, w2) forment un montage en triangle.

2. Agencement de circuits selon la revendication 1, **caractérisé en ce que** dans chaque phase (R, S, T) d'un réseau d'entrée triphasé se trouve un enroulement d'un moteur à courant alternatif monophasé.
